# EUROPEAN PATENT APPLICATION

(11) **EP 1 987 902 A1**
(43) Date of publication of application: **05.11.2008**
(21) Application number: 08250530.6
(22) Date of filing: 13.02.2008
(51) Int. Cl.: B23K 1/00, B23K 1/19, B23K 1/20, B23K 20/02, B23P 15/04, F01D 5/00, F01D 5/18, B23K 101/00

(54) **Brazing process incorporating graphitic preforms**

(30) Priority: 30.04.2007 US 799013
(71) Applicant: United Technologies Corporation, Hartford, CT 06101 (US)
(72) Inventor: Minor, Michael J., Arlington, TX 76018 (US); Pellet, Paul M., Arlington, TX 76006 (US)
(74) Representative: Tomlinson, Kerry John

(57) **Abstract**

The present application relates to a method of processing a metal component comprising inserting a graphitic preform into an aperture of the metal component (step 14), brazing the metal component (step 16), and removing at least a portion of the graphitic preform from the aperture with a thermal process in an oxygen-containing atmosphere (step 18).

## Description

### BACKGROUND

The present invention relates to methods for manufacturing and repairing metal components. In particular, the present invention relates to brazing processes for manufacturing and repairing metal components.

The manufacture and repair of gas turbine engines typically require the use of brazing processes, such as diffusion brazing processes, to secure metal components together, or to repair cracks in the metal components. For example, various metal components may be secured together with a brazing process to form an airfoil of a turbine blade or vane. Alternatively, brazing processes may be used to repair cracks in turbine blades and vanes. When securing metal components together with a brazing process, a first metal component is typically tack welded onto a second metal component. A brazing alloy is then applied externally to fill the gaps between the first and second metal components via capillary action. The tack-welded metal components are then heated (locally or entirely) to fuse the first metal component to the second metal component with the brazing alloy.

A common issue with brazing is that, during the heating process, excess amounts of the applied brazing alloy can flow into apertures of the metal components (e.g., seal slots, airfoil coolant holes, and core cavities of turbine blades and vanes). This requires extra time and effort to remove the brazing alloy from the apertures before the metal component may be used. This can be particularly problematic if the brazing alloy flows into critical areas of airfoil components during the brazing process, thereby resulting in the need to recycle or scrap the airfoil components.

One technique for preventing the flow of brazing alloys into the apertures of the airfoil component involves blocking the apertures with preforms. However, current preforms may melt with the molten brazing alloy (e.g., molybdenum preforms), or may not retain their shapes during the brazing processes (e.g., aluminum oxide organic binder preforms). As such, there is a need for a brazing process that is suitable for preventing brazing alloys from entering apertures in metal components.

### SUMMARY

The present invention relates to a method for processing a metal component having an aperture. The method includes inserting a graphitic preform into the aperture of the metal component, brazing the metal component, and removing the graphitic preform from the aperture with a thermal process in an oxygen-containing atmosphere.

In another aspect, the invention provides a method for processing a metal component, the method comprising:
inserting at least one graphitic preform into at least one aperture of the metal component;
heating the metal component containing the at least one inserted graphitic preform in an environment that is substantially free of oxygen; and
heating the metal component containing the at least one inserted graphitic preform in an oxygen-containing atmosphere.

### BRIEF DESCRIPTION OF THE DRAWINGS

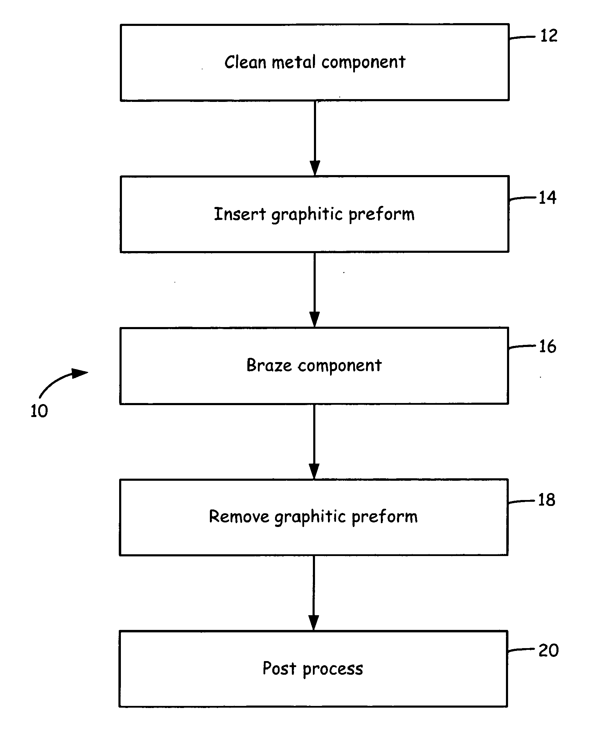

The figure is a flow diagram of an example method for processing a metal component pursuant to the present invention.

### DETAILED DESCRIPTION

The figure is a flow diagram of method 10 for processing (e.g., manufacturing or repairing) a metal component, such as a turbine engine component, having at least one aperture. Examples of suitable turbine engine components for use with the method include airfoil components (e.g., blades and vanes) that have one or more apertures extending through the surfaces of the components (e.g., seal slots, airfoil coolant holes, and core cavities). As discussed below, method 10 includes steps 12-20, and involves the use of one or more graphitic preforms that function as stop offs during a brazing process, and which may be readily removed from the metal component with a thermal process after the brazing process is completed.

The method initially involves cleaning the metal component, if needed or desired, to remove any oxide residue (step 12). During operation, turbine engine components are exposed to extreme temperatures. Operating at such high temperatures in an oxygen-containing atmosphere results in the formation of an oxide layer on the surface of the components, and the interior walls of any cracks that may form. Such oxide layers effectively function as diffusion barriers, thereby preventing brazing materials from bonding to the walls of the components. The oxide layer may be removed by cleaning the metal component (e.g., with hydrogen fluoride gas). The cleaning process is desirably continued for a sufficient duration to at least substantially remove the oxide layer from the metal component.

After the metal component is cleaned, a graphitic preform is inserted into an aperture of the metal component to function as a stop off during the subsequent brazing process (step 14). The graphitic preform desirably has dimensions that substantially match the dimensions of the aperture, and allow the graphitic preform to be readily inserted into, and frictionally retained within, the aperture. For example, for a airfoil coolant hole aperture, the graphitic preform may be an elongated rod having a diameter that substantially matches the diameter of the airfoil coolant hole aperture. This allows the elongated rod to be inserted into the aperture, and frictionally retained within the aperture during the brazing process. Alternatively, multiple graphitic preforms may be inserted into a single aperture of the metal component to function together as a single stop off. At least one graphitic preform is desirably inserted into each aperture in the metal component that may be exposed to brazing material in the brazing process.

The graphitic preform is formed from a graphite-containing material that includes at least 75% by weight carbon graphite. Examples of particularly suitable concentrations of graphite in the graphite-containing material include at least about 90% by weight carbon graphite, with even more particularly suitable concentrations of graphite in the graphite-containing material including at least about 99% by weight carbon graphite. Suitable additional materials in the graphite-containing material include clay (e.g., bentonite or kaolin), binding agent polymers, and combinations thereof. The graphitic preform may be formed in a variety of manners, such as powder pressing and molding. Accordingly, the graphitic preform can exhibit different shapes and sizes to match a variety of different apertures in metal components. In one embodiment, the graphitic preform is coated with one or more layers of a protective material (e.g., aluminum oxide) to further reduce any potential flow or reaction with the brazing material.

After the graphitic preform is inserted into the aperture, the metal component is subjected to a brazing process (step 16). Suitable brazing processes include conventional brazing processes and diffusion brazing processes, each of which may be performed in a variety of manners. In one embodiment, for a diffusion brazing process to secure a separate metal part to the metal component, the separate part is initially tacked welded to a desired surface of the metal component. A brazing material is then applied to fill the gaps between the separate part and the metal component via capillary action. Examples of suitable materials for the metal component, the separate part, and the brazing material include nickel, nickel-based alloys and superalloys, cobalt, cobalt-based alloys and superalloys, and combinations thereof; and may also include one or more additional materials such as carbon, titanium, chromium, niobium, hafnium, tantalum, molybdenum, tungsten, aluminum, and iron.

The metal component is then subjected to a series of heating cycles, which melt and diffuse the brazing material into the surface of the metal component and the separate part, thereby fusing the previously-separate part to the metal component. In one embodiment, the diffusion brazing process involves heating the metal component with an initial, high-temperature, melting step, followed by a longer, lower-temperature, diffusion step. Examples of suitable temperatures for the melting step range from about 1200°C (about 2200°F) to about 1260°C (about 2300°F), and examples of suitable durations for the melting step range from about 5 minutes to about 30 minutes. Examples of suitable temperatures for the diffusion step range from about 1040°C (about 1900°F) to about 1200°C (about 2200°F), and examples of suitable durations for the diffusion step range from about 1 hour to about 20 hours. The diffusion brazing process may alternatively include a different number of heating cycles depending on the desired result of the diffusion brazing process.

The elevated temperatures of the brazing process cause the brazing material to melt to a flowable state. As a result, excess portions of the molten brazing material may flow under the force of gravity around the aperture in the metal component. If the graphitic preform was not retained in the aperture, the molten brazing material may enter and seal the aperture, thereby requiring subsequent removal. As discussed above, the subsequent removal increases the time and effort required to process the metal component, and may result in the recycling or scrapping of the metal component. However, the graphitic preform retained in the aperture physically blocks the molten brazing material, thereby preventing the brazing material from entering the aperture during the brazing process.

The brazing process is desirably performed under reduced pressure, such as in a vacuum furnace. Examples of suitable reduced pressures include about 1 Torr or less, with particularly suitable pressures including about 0.001 Torr or less. Alternatively, the heating cycles may be performed under partial pressure in an inert-gas atmosphere (e.g., argon gas). Such environments are substantially free of oxygen, thereby preventing the graphitic preform from oxidizing and decomposing under the elevated temperatures of the brazing process. As such, the graphitic preform substantially retains its shape during the brazing process, and prevents the brazing material from entering the aperture of the metal component. As used herein, the term "substantially free of oxygen" refers to an environment that has a pressure of about 1 Torr or less (e.g., reduced pressure), has an oxygen (O₂) concentration of about 100 parts-per-million by volume or less (e.g., inert-gas atmosphere), or a combination thereof.

After the brazing process is complete, the metal component may be cooled to solidify the brazing material. Upon cooling, the previously-separate part is fused to the surface of the metal component with the brazing material. The graphitic preform is desirably retained within the aperture of the metal component until the brazing process is complete and the brazing material is at least substantially solidified. This allows the graphitic preform to continue to function as a stop off in the aperture until the brazing material no longer poses a risk of flowing into the aperture.

The graphitic preform is then removed from the aperture of the metal component with a post-brazing thermal process (step 18). The thermal process involves heating the metal component in an oxygen-containing atmosphere to oxidize and decompose the graphitic preform. The thermal process may be performed with any system capable of heating the metal component in an oxygen-containing atmosphere. Examples of suitable temperatures for the thermal process include at least about 540°C (about 1000°F), with particularly suitable temperatures including at least about 870°C (about 1600°F). Examples of suitable durations for the thermal process include range from about 1 hour to about 48 hours, with particularly suitable durations ranging from about 1 hour to about 10 hours. The rate of oxidation and decomposition is dependent on the exposed surface area of the graphitic preform. As such, the graphitic preform is desirably formed to substantially maximize its exposed surface area, thereby reducing the time required to remove the graphitic preform from the aperture. The rate of oxidation and decomposition is also dependent on the temperature of the thermal process, which allows the thermal process to be completed in less time. For example, the metal component may be exposed to a temperature of about 870°C (about 1600°F) for a duration of about 3 hours, or to a temperature of about 930°C (about 1700°F) for a duration of 2 hours.

As discussed above, the brazing process of step 16 is performed in an environment that is substantially free of oxygen (e.g., low pressure or inert-gas atmosphere). The substantial lack of oxygen allows the graphitic preform to withstand the elevated temperatures of the brazing process without oxidizing or decomposing. However, in the oxygen-containing atmosphere of the post-brazing thermal process, the elevated temperature of the thermal process bums off and oxidizes the carbon graphite of the graphitic preform to form carbon dioxide (CO₂). Accordingly, the thermal process to remove the graphitic preform from the aperture may be performed at a temperature that is lower than the one or more temperatures used in the brazing process (i.e., the brazing temperature(s) are greater than the thermal process temperature). This is desirable to prevent the brazing material from remelting after the brazing process is complete. Accordingly, examples of a suitable temperatures for the thermal process also include less than about 1040°C (about 1900°F), or less.

After brazing processes, metal airfoil components are typically exposed to one or more precipitation heat treatments. Such heat treatments are typically maintained at elevated temperatures for extended durations (e.g., about 870°C for about 32 hours), and may be performed in oxygen-containing atmospheres. Thus, the thermal process to remove the graphitic preform from the aperture may occur during the precipitation heat treatment of the metal part.

In another embodiment, the brazing process of step 16 and the thermal process of step 18 for removing the graphitic preform are performed in the same system (e.g., the same furnace). In this embodiment, after the brazing process of step 16 is complete, oxygen is introduced into the system to oxidize and decompose the graphitic preform. The temperature may also be modified from the final temperature used in the brazing process to the desired thermal process temperature. This embodiment reduces the time otherwise required to cool and reheat the metal component between the brazing process of step 16 and the thermal process of step 18, thereby further reducing the time required to process the metal component.

After the graphitic preform is at least substantially removed from the aperture of the metal component, the metal component may undergo one or more post-processing operations (step 20). Examples of suitable post-processing operations include cleaning steps to remove any residual portions of the graphitic preform, surface smoothing operations, surface treatment operations (e.g., plating), and combinations thereof. However, because the graphitic preform prevented the brazing material from flowing into the aperture of the metal component, the step of removing brazing material from the aperture is not required. This reduces the time and effort required to process the metal component. After method 10 is complete, the metal component is then ready for use (e.g., in a turbine engine), or may undergo additional processing steps.

Although the present invention has been described with reference to preferred embodiments, workers skilled in the art will recognize that changes may be made in form and detail without departing from the scope of the invention, which is defined by the claims. For example, while the above discussion focuses on a single graphitic preform used in a single aperture of the metal component, method 10 may also be used in the same manner with metal components having multiple apertures of the same or different sizes and shapes.

## Claims

1. A method for processing a metal component, the method comprising:
inserting (14) a graphitic preform into an aperture of the metal component;
brazing (16) the metal component containing the inserted graphitic preform; and
removing (18) at least a portion of the graphitic preform from the aperture with a thermal process in an oxygen-containing atmosphere.

2. The method of claim 1, wherein the brazing is performed in an environment that is substantially free of oxygen.

3. The method of claim 1 or 2, wherein the thermal process is performed at a temperature of at least about 540°C.

4. The method of claim 3, wherein the temperature of the thermal process is at least about 870°C.

5. The method of claim 1, 2, 3 or 4, wherein the thermal process is performed at a temperature of about 1040°C or less.

6. The method of any preceding claim, wherein the graphitic preform comprises at least about 75% by weight carbon graphite.

7. The method of claim 7, wherein the graphitic preform comprises at least about 90% by weight carbon graphite.

8. The method of claim 8, wherein the graphitic preform comprises at least about 99% by weight carbon graphite.

9. The method of any preceding claim, further comprising performing a process selected from the group consisting of cleaning the metal component, surface smoothing the metal component, surface treating the metal component, and combinations thereof.

10. The method of any preceding claim, wherein brazing the metal component comprises diffusion brazing the metal component.

11. A method for processing a metal component, the method comprising:
inserting (14) at least one graphitic preform into at least one aperture of the metal component;
heating (16) the metal component containing the at least one inserted graphitic preform in an environment that is substantially free of oxygen; and
heating (18) the metal component containing the at least one inserted graphitic preform in an oxygen-containing atmosphere.

12. The method of claim 11, wherein heating the metal component in the oxygen-containing atmosphere comprises exposing the metal component to a temperature of at least about 540°C.

13. The method of claim 12, wherein the temperature that the metal component is exposed to is at least about 870°C.

14. The method of claim 11, 12 or 13, wherein heating the metal component in the oxygen-containing atmosphere comprises exposing the metal component to a temperature of about 1040°C, or less.

15. The method of claim 11, 12, 13 or 14, wherein heating the metal component in the environment that is substantially free of oxygen comprises exposing the metal component to a temperature that is greater than a temperature obtained while heating the metal component in the oxygen-containing atmosphere.

16. A method for securing a first metal component to a second metal component, the method comprising:
inserting (14) at least one graphitic preform into at least one aperture of the first metal component;
positioning a second metal component on a surface of the first metal component;
brazing (16) the second metal component to the first metal component containing the at least one inserted graphitic preform; and
heating (18) the first metal component containing the at least one inserted graphitic preform in an oxygen-containing atmosphere.

17. The method of claim 16, wherein the brazing is performed in an environment that is substantially free of oxygen.

18. The method of claim 16 or 17, wherein heating the first metal component in the oxygen-containing atmosphere comprises exposing the first metal component to a temperature of at least about 540°C.

19. The method of claim 18, wherein the temperature that the first metal component is exposed to is at least about 870°C.

20. The method of claim 16, 17, 18 or 19, wherein heating the first metal component in the oxygen-containing atmosphere comprises exposing the first metal component to a temperature of about 1040°C, or less.
